# EUROPEAN PATENT APPLICATION

(11) **EP 3 343 506 A1**
(43) Date of publication of application: **04.07.2018**
(21) Application number: 16306836.4
(22) Date of filing: 28.12.2016
(51) Int. Cl.: G06T 7/50, G06T 7/12, G06T 7/174

(54) **METHOD AND DEVICE FOR JOINT SEGMENTATION AND 3D RECONSTRUCTION OF A SCENE**

(71) Applicant: Thomson Licensing, 92130 Issy-les-Moulineaux (FR)
(72) Inventor: LUO, Tao, 35576 Cesson Sévigné (FR)
(74) Representative: Huchet, Anne

(57) **Abstract**

A method for joint segmentation and 3D reconstruction of a scene, from a set of at least one image of the scene, comprises:
- obtaining (11) an initial 3D reconstruction of the scene;
- obtaining (12) initial 3D features associated with the initial 3D reconstruction;
- obtaining (13) an initial segmentation of the initial 3D reconstruction;
- determining (14) enhanced 3D features, from the initial 3D features and from initial 2D features determined in at least one image of the set, as corresponding to the initial 3D features associated with the initial 3D reconstruction of the scene; and
- determining (15) an enhanced segmentation and a refined 3D reconstruction, from the initial segmentation and the enhanced 3D features.

Application to Augmented Reality.

## Description

### 1. Technical field

The present disclosure relates to the field of signal processing, and more specifically to the processing of image or video.

More particularly, the disclosure relates to a method for joint segmentation and 3D reconstruction of a scene, aiming at improving the segmentation and reconstruction of the scene compared to some of the prior art techniques.

The disclosure is particularly adapted to any applications where 3D reconstruction is of interest. This can be the case for instance in fields like navigation, autonomous robotics, virtual reality, augmented and/or mixed reality, smart home apparatus, etc.

### 2. Background art

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

With the development of depth sensors, more and more devices have to deal with 3D data. Challenging problems thus arise to process the captured data and get better scene understanding. In particular, both segmentation and 3D reconstruction are important to achieve an accurate 3D representation of a scene.

Segmentation and 3D reconstruction have first been considered individually. The result was not satisfactory.

As the performance of segmentation is usually affected by the 3D reconstruction, and vice-versa, segmentation and 3D reconstruction have then been considered jointly. To do so, some of the prior art techniques rely on a joint semantic segmentation and reconstruction based on a labeled training dataset.

For example, C. Hane et al. disclose, in "Joint 3D Scene Reconstruction and Class Segmentation" (IEEE Conference on Computer Vision and Patter Recognition (CVPR), 2013), a solution to a joint segmentation and dense reconstruction problem. The data images and their corresponding depth maps are taken as input, and a 3D reconstruction with accurate class labels is generated as output. The authors extend the traditional volumetric reconstruction method to a multi-label volumetric segmentation framework. According to this technique, appearance-based cues and 3D surface orientation priors are learned from training data and subsequently used for class-specific regularization. These priors are complementary to the measured evidence acquired from the depth maps, to improve the reconstruction and labeling together.

In "Joint Semantic Segmentation and 3D Reconstruction from Monocular Video", by A. Kundu et al. (European Conference on Computer Vision, 2014), starting with monocular image stream, a visual SLAM ("Simultaneous Localization And Mapping") and an initial 2D scene parsing are performed. The technique produces a 3D map, which depicts both 3D structure and semantic labels. According to this technique, the category-specific sensor models are used to enhance the depth estimates from SLAM, and the knowledge of unoccupied space from successive camera positions helps to reduce the structural ambiguities.

Both of the above-mentioned techniques consider the semantic segmentation, and employ the object category-specific cues to achieve the 3D reconstruction. Thus, the performance of these techniques relies on training data, especially on the scalability of dataset, like the number of object categories. In addition, the reconstruction is represented as volumetric data, so it is limited in terms of spatial resolution. Furthermore, the final 3D reconstruction is relatively coarse in terms of geometry. For example, the sharp edges of object are often smooth, and the straight lines are often affected by noisy data. Therefore, the 3D reconstruction is not accurate enough to make finer interactions in some applications.

There is thus a need for a method for joint segmentation and 3D reconstruction of a scene allowing, in particular, a good reconstruction quality of the objects geometry.

### 3. Summary

The present disclosure relates to a method for joint segmentation and 3D reconstruction of a scene, from a set of at least one image of the scene, comprising:
- obtaining an initial 3D reconstruction of the scene;
- obtaining initial 3D features associated with the initial 3D reconstruction;
- obtaining an initial segmentation of the initial 3D reconstruction;
- determining enhanced 3D features, from the initial 3D features and from initial 2D features determined in at least one image of the set, as corresponding to the initial 3D features associated with said initial 3D reconstruction of the scene; and
- determining an enhanced segmentation and a refined 3D reconstruction, from the initial segmentation and the enhanced 3D features.

The present disclosure thus proposes a new and inventive solution for the joint segmentation and 3D reconstruction of a scene, where the scene can notably be an object, overcoming at least one of the above-mentioned shortcomings. In particular, the present disclosure does not rely on a training data set.

As the performance of segmentation can be improved by the 3D reconstruction of the scene, and vice-versa, both segmentation and reconstruction can contribute to each other and can be considered jointly.

More specifically, the present disclosure offers a solution for refining an initial 3D reconstruction of the scene, also called initial 3D model, and enhancing the segmentation, thanks to initial 2D features determined in the image data. The refined 3D reconstruction and enhanced segmentation are thus determined jointly, according to at least one embodiment of the disclosure.

By taking account of 2D features, an accurate 3D reconstruction of the scene, notably in terms of geometry, can thus be achieved. An enhanced segmentation can also be obtained.

Such a refined or accurate 3D reconstruction and enhanced segmentation can then be used in further applications, such as texture mapping, deformation, collision detection in augmented reality, etc.

For instance, the 3D reconstruction of the scene belongs to the group comprising:
- points cloud,
- mesh model,
- volumetric model.

The segmentation can thus be enhanced by updating the labels of the components of 3D elements on the refined 3D reconstruction (i.e. on the initial 3D reconstruction that is refined from the enhanced 3D features). A "3D element" is, for example, a point of a cloud of points, a polygon of a polygonal mesh model, a voxel of a volumetric model, etc., and a "component" is a group of 3D elements that have the same label, for example a planar region.

According to one embodiment, the 3D features are 3D feature lines and the 2D features are 2D feature lines. In another embodiment, the 3D features are 3D points and the 2D features are 2D points.

The segmentation is thus based on geometric features, not on semantic features.

The segmentation and 3D reconstruction according to this embodiment are thus not dependent on the quality and/or scalability of semantic / labeled training data.

At least one embodiment of the disclosure thus discloses an algorithm for the joint optimization of the segmentation and the 3D reconstruction of the scene, aiming at determining, for example from RGB-D data (from Red Green Blue and Depth data), a set of segmented regions with refined geometry. The refined geometry makes the segmentation more accurate, and the more accurate segmentation provides additional geometric cues for the refinement of geometry.

According to one embodiment, obtaining the initial 3D reconstruction of the scene comprises constructing the initial 3D reconstruction from depth data. The initial 3D reconstruction of the scene can thus either be determined upstream and received directly in the operating apparatus, or constructed in the operating apparatus.

According to one embodiment, obtaining the initial 3D features comprises identifying 3D features in the initial 3D reconstruction of the scene using geometry characteristics and/or local feature descriptors. Alternatively, the initial 3D features may have been determined upstream and be received directly in the operating apparatus.

According to one embodiment, the method comprises determining the initial 2D features from:
- selecting images of the set comprising the initial 3D features, known as visible images, and
- identifying the initial 2D features, in the visible images, matching the initial 3D features,
and determining the enhanced 3D features comprises:
- generating geometric cues by matching the initial 2D features across at least two visible images, and
- enhancing the initial 3D features with the geometric cues to determine the enhanced 3D features.

The initial 2D features can thus either be determined from image data (i.e. derived from images of the set), or received in the operating apparatus after an upstream pre-processing. In particular, the selection of visible images, among the set of images, enables further processing to be computationally efficient. It also leads to a reduction in the errors that can be generated by inaccurate camera pose estimates (for example in terms of position and/or orientation).

The enhanced 3D features can be determined by matching the initial 2D features across visible images. Such matching of 2D features is indeed used to construct the 3D geometric cues, for example by exploiting multi-view stereo methods.

According to one embodiment, the method comprises at least one iteration of:
- determining further enhanced 3D features, from the enhanced 3D features and from enhanced 2D features determined in said at least one image of the set, as corresponding to the enhanced 3D features associated with said refined 3D reconstruction of the scene; and
- determining a further enhanced segmentation and a further refined 3D reconstruction from the enhanced segmentation and the further enhanced 3D features.

In particular, said images of the set are preferably the selected visible images.

In this way, one or more iteration can be implemented to further enhance the segmentation and further refine the 3D reconstruction.

According to one embodiment, the iterations are stopped when a predetermined precision threshold is reached. Such a predetermined precision threshold can be a threshold on at least a matching between said further enhanced 3D features and said enhanced 2D features.

For example, said predetermined precision threshold is jointly applied to at least one of a segmentation level, a consistency of labels between neighboring similar 3D elements measured on said further refined 3D reconstruction, and an alignment between said at least one image of the set (for example visible images) and said further refined 3D reconstruction.

According to one embodiment, the refined or further refined 3D reconstruction and the enhanced or further enhanced segmentation are considered in at least one energy function for a same iteration. The resolution of the optimization problem can however be implemented in two steps: in a first step, the 3D reconstruction is fixed to enhance the segmentation, and in a second step, the enhanced segmentation is fixed to refine the 3D reconstruction.

More specifically, at initialisation, the refined 3D reconstruction is determined from the initial 3D reconstruction and the enhanced 3D features. The refined 3D reconstruction is fixed to determine the enhanced segmentation. The enhanced segmentation can also be fixed, according to one embodiment, to determine the further refined 3D reconstruction.

For the subsequent iterations, the 3D reconstruction obtained at the preceding iteration is fixed to determine a further enhanced segmentation. The further enhanced segmentation is then fixed to determine a further refined 3D reconstruction.

For each iteration, there is thus a joint determination of an enhanced segmentation and refined 3D reconstruction.

Preferably in combination with the predetermined precision threshold, or alternatively, the iterations are stopped when a predetermined number of iterations is reached.

According to one embodiment, determining the enhanced segmentation relies on segmentation constraints. Such segmentation constraints are also called "priors".

In particular, the segmentation constraints are related to at least one segment shape, like planar shape, convex shape, cuboid shape, cylinder shape, etc.

According to one embodiment, the method comprises receiving said initial 3D reconstruction and said set of at least one image as at least one input, determining the enhanced 3D features, enhanced segmentation and refined 3D reconstruction with at least one processor and outputting said enhanced segmentation and said refined 3D reconstruction from at least one output for displaying said refined 3D reconstruction to a user and for processing said refined 3D reconstruction by means of said enhanced segmentation.

Another aspect of the present disclosure relates to a computer program product downloadable from a communication network and/or recorded on a medium readable by computer and/or executable by a processor comprising software code adapted to perform the above-mentioned method for joint segmentation and 3D reconstruction, in any of its embodiments, when it is executed by a computer or a processor.

Another aspect of the present disclosure relates to a non-transitory computer-readable carrier medium storing a computer program product which, when executed by a computer or a processor, causes the computer or the processor to carry out the above-mentioned method for joint segmentation and 3D reconstruction, in any of its different embodiments.

The present disclosure also relates to a device for joint segmentation and 3D reconstruction of a scene, from a set of at least one image of the scene, comprising:
- means for obtaining an initial 3D reconstruction of the scene;
- means for obtaining initial 3D features associated with the initial 3D reconstruction;
- means for obtaining an initial segmentation of the initial 3D reconstruction;
- means for determining enhanced 3D features, from the initial 3D features and from initial 2D features determined in at least one image of the set, as corresponding to the initial 3D features associated with said initial 3D reconstruction of the scene; and
- means for determining an enhanced segmentation and a refined 3D reconstruction, from the initial segmentation and the enhanced 3D features.

The disclosure further pertains to a device comprising at least one processor adapted and configured to:
- obtain an initial 3D reconstruction of the scene;
- obtain initial 3D features associated with the initial 3D reconstruction;
- obtain an initial segmentation of the initial 3D reconstruction;
- determine enhanced 3D features, from the initial 3D features and from initial 2D features determined in at least one image of the set, as corresponding to the initial 3D features associated with said initial 3D reconstruction of the scene; and
- determine an enhanced segmentation and a refined 3D reconstruction, from the initial segmentation and the enhanced 3D features.

Such a device is particularly adapted for implementing the method for joint segmentation and 3D reconstruction of a scene according to the present disclosure. It could comprise the different characteristics pertaining to the method according to any embodiment of the disclosure, which can be combined or taken separately. In other words, such a device is adapted to carry out any of the execution modes of the method for joint segmentation and 3D reconstruction according to the present disclosure.

Thus, the characteristics and advantages of this device are the same as the disclosed method for joint segmentation and 3D reconstruction of a scene in any of its different embodiments.

Another aspect of the present disclosure relates to an apparatus comprising a device for joint segmentation and 3D reconstruction of a scene, such as the above-mentioned device.

Thus, the characteristics and advantages of such an apparatus are the same as the disclosed method for joint segmentation and 3D reconstruction of a scene in any of its different embodiments.

In particular, such an apparatus can be a mobile apparatus, preferably chosen among a mobile phone, a tablet, and a head-mounted display.

According to different embodiments, such an apparatus can be an autonomous apparatus, preferably chosen among a robot, an autonomous driving apparatus, and a smart home apparatus.

The present disclosure is thus particularly suited for applications in fields like navigation, autonomous robotics, virtual reality, augmented and/or mixed reality, smart home apparatus, etc.

The present disclosure thus also relates to an application of the disclosure to such fields.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

### 4. Brief description of the drawings

The disclosure will be better understood and illustrated by means of the following embodiment and execution examples, in no way limitative, with reference to the appended figures in which:
- Figure 1 is a flow chart illustrating the main steps of a method for joint segmentation and 3D reconstruction according to an embodiment of the disclosure;
- Figure 2 illustrate an embodiment of the disclosure, in which the 2D and 3D features are feature lines;
- Figure 3 illustrates an example of initial 3D reconstruction of a scene;
- Figure 4 illustrates an example of initial 3D features associated with the initial 3D reconstruction of the scene of figure 3;
- Figure 5 illustrates an example of initial segmentation associated with the initial 3D reconstruction of the scene of figure 3;
- Figures 6A and 6B are examples of multi-view images of the scene represented in Figure 3;
- Figure 7A and 7B illustrate examples of initial 2D features determined in the multi-view images of figures 6A and 6B;
- Figure 8 illustrates an example of enhanced 3D features;
- Figure 9 illustrates an example of refined 3D reconstruction and enhanced segmentation;
- Figure 10 is a block diagram of a device implementing the method for joint segmentation and 3D reconstruction according to an embodiment of the disclosure.

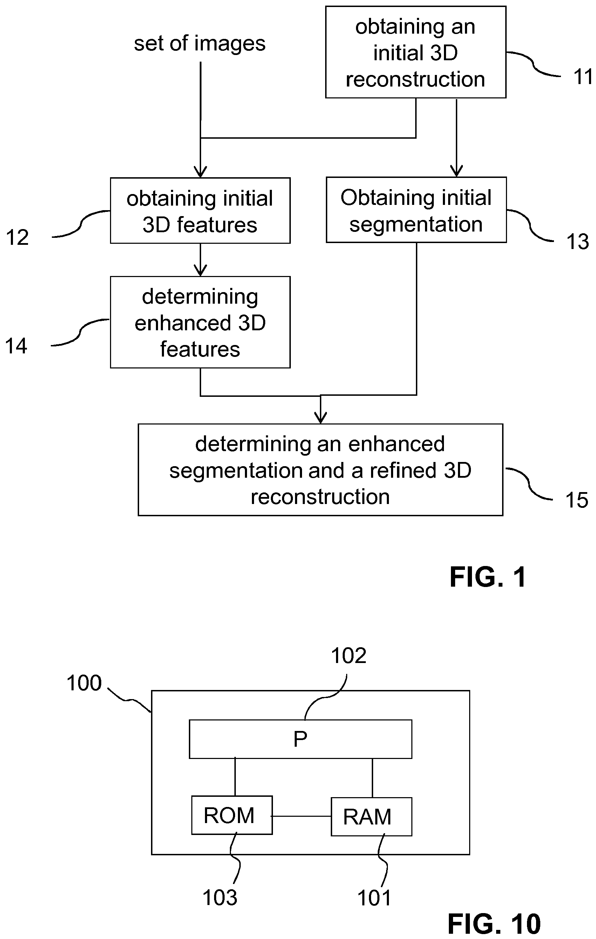

In Figures 1,2 and 10, the represented blocks are purely functional entities, which do not necessarily correspond to physically separate entities. Namely, they could be developed in the form of software, hardware, or be implemented in one or several integrated circuits, comprising one or more processors.

### 5. Description of embodiments

It is to be understood that the figures and descriptions of the present disclosure have been simplified to illustrate elements that are relevant for a clear understanding of the present disclosure, while eliminating, for purposes of clarity, many other elements found in typical operating apparatus, like mobile apparatus (for example mobile phone, tablet, head-mounted display, etc.), or autonomous apparatus (for example robot, autonomous driving apparatus, smart home apparatus, etc.).

The general principle of the disclosure relies on the determination of a refined 3D reconstruction of a scene and an enhanced segmentation, from an initial 3D reconstruction of the scene and from initial 2D features determined in at least one image of a set of images of the scene, as corresponding to initial 3D features associated with the initial 3D reconstruction of the scene.

The scene could notably be an object. The scene can thus be composed of one or more objects.

In particular, the refined 3D reconstruction of a scene is determined thanks to enhanced 3D features obtained from the initial 2D and 3D features, and the enhanced segmentation is determined from the refined 3D reconstruction.

The main steps of the method for joint segmentation and 3D reconstruction according to an embodiment of the disclosure are illustrated in **Figure 1****.**

For example, the input is RGB-D data, like a sequence of images of the scene and their depth data. In variant, the input is the initial 3D reconstruction of the scene (also called an initial 3D model) and its multi-view images.

In block 11, an initial 3D reconstruction of the scene is obtained. Such initial 3D reconstruction can either be constructed from depth data or from a set of images of the scene, or determined upstream and received directly in the operating apparatus/device. It should be noted that the initial 3D reconstruction can be constructed by any known technique. For example, it can be determined by off-the-shelf depth fusion tools like KinectFusion® or by depth sensors like Intel RealSense®.

In block 12, initial 3D features associated with the initial 3D reconstruction are obtained. Such initial 3D features can either be obtained by analyzing the initial 3D reconstruction, or be determined upstream and received directly in the operating apparatus/device.

In block 13, an initial segmentation of the initial 3D reconstruction is obtained. Such an initial segmentation can be a coarse segmentation of the scene. It should be noted that the initial segmentation can be determined by any known technique. For example, it can be determined by random labeling or planar region growing. The initial segmentation can also be constrained by segmentation priors, as described later in the specification. In particular, if the segmentation is determined by an advanced technique, such as the technique disclosed by X. Chen et al. in "A Benchmark for 3D Mesh Segmentation" (ACM Transaction on Graphics, 2009) for example, the use of segmentation priors is not required. However, segmentation priors can also be used with advanced segmentation technique, depending on the targeted application.

In block 14, enhanced 3D features are determined, from the initial 3D features and initial 2D features determined in at least one image of the set, as corresponding to the initial 3D features associated with the initial 3D reconstruction of the scene. The initial 2D features can either be determined from the set of images, or determined upstream and be received directly in the operating apparatus/device.

In block 15, an enhanced segmentation and a refined 3D reconstruction of the scene are determined, from the initial segmentation and the enhanced 3D features. Preferably, the enhanced segmentation is constrained by the segmentation priors. It should be noted that, as the initial segmentation is usually designed to segment roughly the 3D model into planar regions, the enhanced segmentation can deliver planar regions with accurate boundaries if it is not constrained by segmentation priors. Thus, a complete object of a scene is segmented into a series of planar components. For advanced applications, the segmentation priors (e.g. convex shape) are exploited to have complete objects segmented.

In order to further improve the segmentation and 3D reconstruction of the scene, blocks 14 and 15 can be implemented iteratively until a stop condition is fulfilled. More specifically, at each iteration, further enhanced 3D features can be determined - from the enhanced 3D features and enhanced 2D features determined in the images of the set, as corresponding to the enhanced 3D features associated with the refined 3D reconstruction of the scene - and a further enhanced segmentation and a further refined 3D reconstruction can then be determined - from the enhanced segmentation and the further enhanced 3D features.

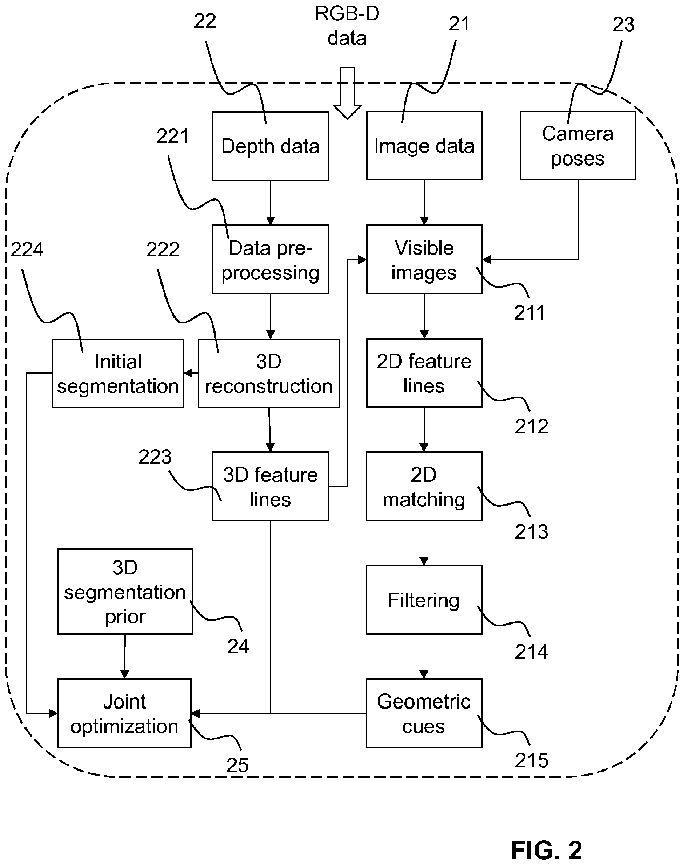

Referring now to **Figure 2****,** we illustrate an embodiment of the disclosure, in which the 2D and 3D features are geometric features, like feature lines. We consider RGB-D data as input, comprising image data (also called set of images), and corresponding depth data.

According to this embodiment, the main blocks are designed to establish a correspondence between 3D features associated with an initial 3D reconstruction of the scene, and the geometric cues derived from the image data, and to jointly optimize the components labels and refine the geometry for the 3D object(s). The segmentation is also enhanced by taking account of shape constraints, i.e. segmentation priors.

For example, image data 21, depth data 22 and camera poses 23 are obtained by depth sensors, like Intel RealSense® (for example through the Software Development Kit of depth sensors). We assume that the image and depth data are well aligned, and the camera poses are computed without large errors. A pre-processing can be implemented to align the image and depth data, or to process the camera poses if need be.

In block 221, the input depth data are pre-processed to produce "clean" data, i.e. data that are suitable for the 3D reconstruction of the scene. For example, the pre-processing operation comprises at least one of the following: removal of outlier, denoising, sampling, depth inpainting, over-segmentation, etc.

In block 222, the processed depth data are merged (depth fusion) to generate an initial 3D reconstruction of the scene. For example, an off-the-shelf tool like KinectFusion® is used to generate the initial 3D reconstruction of the scene. The output 3D reconstruction can be represented as a cloud of points, a mesh model, a volumetric model, etc.

In block 223, initial 3D features associated with the initial 3D reconstruction are obtained. For example, the 3D features are 3D feature lines extracted from the initial 3D reconstruction of the scene using geometry characteristics, such as curvature, convexity/concavity, or local feature descriptors. The extracted initial 3D feature lines depict the shape of the object(s) in the scene.

In block 224, an initial segmentation is defined on the initial 3D reconstruction of the scene, in order to label each 3D element to be segmented into one component. As already mentioned, a "3D element" can be a point of a cloud of points, a polygon of a polygonal mesh model, a voxel of a volumetric model, etc., and a "component" is a group of 3D elements that have the same label, for example a planar region. The initial segmentation illustrates the segment boundaries among different components. It can also be constrained by segmentation priors.

In block 211, visible images are selected among image data 21, based on the initial 3D feature lines extracted from the initial 3D reconstruction of the scene in block 223. To select visible images, one solution is to project the 3D feature lines on each image of the set of images, using a projection of the initial 3D reconstruction, and count the number of visible pixels of the projection on the image to determine whether the image is visible or not (3D-2D matching). Thus, for each 3D feature line, a series of visible image can be found.

In block 212, initial 2D feature lines matching the initial 3D feature lines are extracted in the selected visible images. In order to match the 3D feature lines and 2D feature lines in visible images, a measurement is defined, which could take the orientation and distance between the 2D feature line and the corresponding projected line of 3D feature line into account.

Once the initial 2D feature lines are extracted, a 2D matching among 2D feature lines in different images can be built in block 213. For example, the 2D matching is defined for the 2D feature lines across the selected visible images.

Due to the fact that camera poses 23 can have deviations, the 2D matching among 2D feature lines across visible images could be filtered in block 214, to remove inaccurate matching, corresponding to noisy camera poses. For instance, if we consider a pair of 2D matched lines on a pair of images, each 2D line can be used to reconstruct a 3D line, by using for example an epipolar matching method, such as defined for example in "Incremental Line-based 3D Reconstruction using Geometric Constraints" (M. Hofer et al., British Machine Vision Conference, 2013). By comparing the similarity of two reconstructed 3D lines, the reliability of this pair of matching can be estimated. For example, the similarity of the 3D lines could be evaluated by using their length, orientation, and/or distance. If the similarity is high, the matching of the corresponding 2D lines is reliable, which means that the estimation of camera pose between this pair of images is reliable. If the similarity is low, it means that the camera pose has a large error and this matching should be eliminated.

After the camera poses are filtered, reliable geometric cues are produced in block 215 from the remaining 2D matching across visible images. In other words, the 2D feature lines remaining after the filtering 214 are used to construct 3D feature lines, called geometric cues, for example by using multi-view stereo methods.

Such geometric cues can provide constraints on the initial 3D features, aiming at defining the enhanced 3D features that are used to refine the 3D geometry in the block 25 of joint optimization.

Finally, in block 25, both the component label for each 3D element from initial segmentation 224 and the geometry of 3D element are optimized jointly, to obtain an enhanced segmentation and a refined 3D reconstruction of the scene. In particular, such optimization relies on segmentation constraints 24, also called 3D segmentation priors. For example, classical segmentation prior includes, but is not limited to, planarity, connectivity, convexity/concavity, etc. The segmentation priors could be set up in an individual or combinative way for the joint optimization. Such segmentation priors can be set up to a default value, chosen by a user or a type of application, used explicitly or implicitly, etc.

According to an embodiment of the disclosure, an interface is proposed to import the segmentation priors, which can be configured in advance. For example, a user can adjust a scroll bar corresponding to different levels of segmentation. When a large-scale scene is considered, a low level of segmentation is selected, corresponding to segmentation priors like planar region. When a small-scale scene is considered, like a close up on the surface of a table, a high level of segmentation is selected, corresponding to segmentation priors like cuboid, cylinder shapes.

Several energy functions can be defined for the joint optimization. The determination of the enhanced segmentation and refined 3D representation can be implemented by minimizing at least one of the energy functions.

For example, three energy functions can be defined for the joint optimization: segmentation, smoothness, and geometry refinement. The weights of each energy function can be adjusted, depending for example on a desired quality of the 3D reconstruction of the scene.

In a first iteration, the segmentation energy function can take the initial segmentation 224, the segmentation prior 24, and the initial 3D features 223 into account. Such segmentation energy function can be defined, for example, by the technique disclosed in "A Benchmark for 3D Mesh Segmentation" (X. Chen, et al. ACM Transaction on Graphics, 2009).

The smoothness energy function can consider the consistency of labels between neighboring similar 3D elements measured in the initial reconstruction of the scene. The smoothness energy function can be defined, for example, by measuring, for each 3D element, the difference between its label and the labels of its neighboring 3D elements.

The refinement energy function can measure an alignment between the geometric cues 215 generated from the selected visible images and the initial 3D feature lines 223. The refinement energy function can be defined, for example, by measuring the difference in distance, orientation, and/or length between the initial 3D feature lines (including segmentation boundaries) and the reconstructed geometric cues.

The joint segmentation and refinement could be implemented by putting these energy functions together to be minimized.

A fourth energy function can also be defined to model the alignment error from both image and depth data in case of inaccurate camera poses.

After the first iteration of the joint optimization 25, the component label for each 3D element and the geometry around feature lines could be updated. In other words, after the first iteration of the joint optimization 25, the enhanced segmentation and refined 3D reconstruction can be further enhanced and refined.

For example, in a second iteration, the segmentation energy function can take the enhanced segmentation, the segmentation prior 24, and enhanced 3D features, associated with the refined 3D reconstruction of the scene, into account. The smoothness energy function can consider the consistency of labels between neighboring similar 3D elements measured in the refined 3D reconstruction of the scene. The refinement energy function can measure an alignment between the geometric cues generated from the selected visible images and the enhanced 3D feature lines.

The iterations can be stopped when a predetermined precision threshold is reached (for example a threshold on at least a matching between said enhanced 3D features and said enhanced 2D features), or when a predetermined number of iterations is reached.

Compared to individual segmentation and 3D reconstruction, the method for joint segmentation and 3D reconstruction according to at least one embodiment thus makes segmentation and 3D reconstruction contribute to each other, and achieve better results.

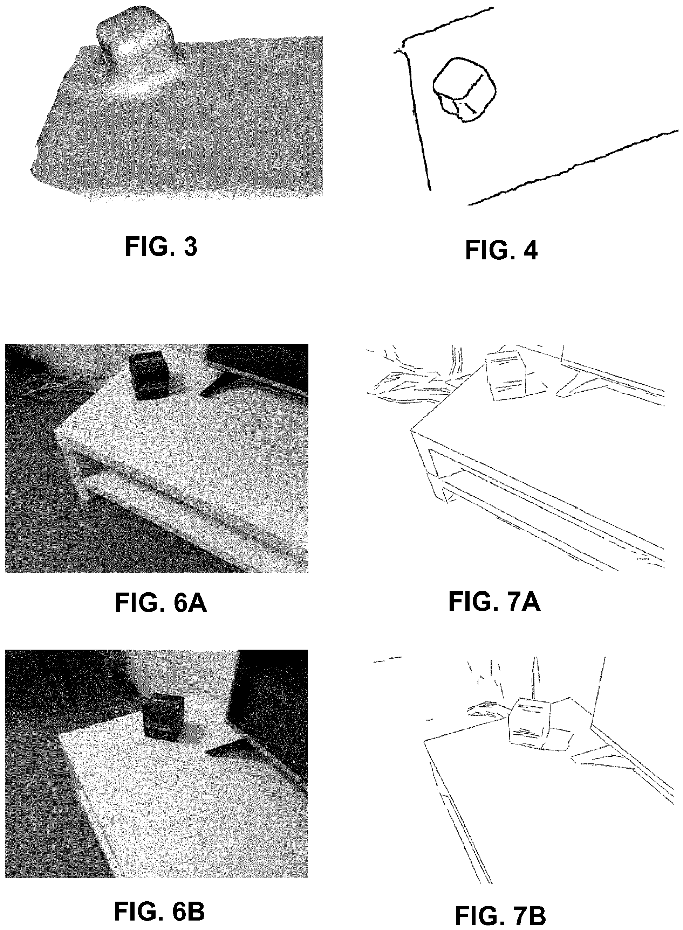

**Figures 3 to 9** illustrate the result of the algorithm for joint segmentation and 3D reconstruction according to an embodiment of the disclosure, for an example of a scene comprising a box on a table.

**Figure 3** illustrates the initial 3D reconstruction of the scene, obtained for example by the KinectFusion® tool in block 222.

**Figure 4** illustrates the initial 3D features associated with the initial 3D reconstruction of the scene, obtained for example in block 223.

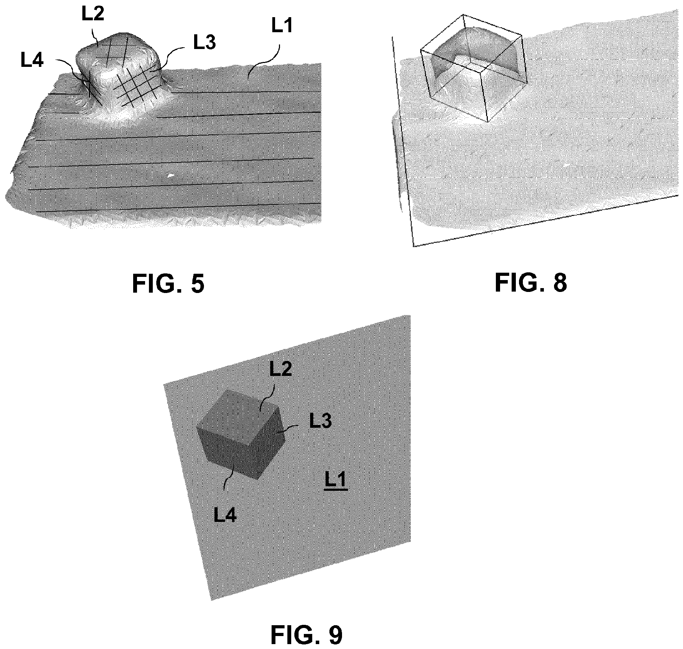

**Figure 5** illustrates the initial segmentation, obtained for example in block 224. For example, if the initial 3D reconstruction of the scene is represented by a mesh surface, then the 3D elements could be triangle faces of the mesh, and the components are the segmented regions labeled L1, L2, L3 and L4.

**Figures 6A and 6B** are multi-view images of the box on the table, selected from a set of input images in block 211.

**Figure 7A and 7B** illustrate the initial 2D features determined in the multi-view images of figures 6A and 6B, obtained for example in block 212.

**Figure 8** illustrates the enhanced 3D features, obtained by applying constraints defined by the geometric cues to the initial 3D features, where the geometric cues are for example generated in block 215 from the 2D feature lines remaining after filtering 214.

**Figure 9** finally illustrates the refined 3D reconstruction and enhanced segmentation, obtained for example in the joint optimization block 25.

Referring now to **Figure 10****,** we illustrate the structural blocks of an exemplary device that can be used for implementing the method for joint segmentation and 3D reconstruction of a scene according to at least one embodiment of the disclosure.

In an embodiment, a device 100 for implementing the disclosed method comprises a non-volatile memory 103 (e.g. a read-only memory (ROM) or a hard disk), a volatile memory 101 (e.g. a random access memory or RAM) and a processor 102. The non-volatile memory 103 is a non-transitory computer-readable carrier medium. It stores executable program code instructions, which are executed by the processor 102 in order to enable implementation of the method described above in its various embodiments.

Upon initialization, the aforementioned program code instructions are transferred from the non-volatile memory 103 to the volatile memory 101 so as to be executed by the processor 102. The volatile memory 101 likewise includes registers for storing the variables and parameters required for this execution.

The steps of the method for joint segmentation and 3D reconstruction of a scene according to at least one embodiment of the disclosure may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In at least one embodiment, the device is provided in an apparatus. Such apparatus can be a mobile apparatus, like a mobile phone, a tablet, a head-mounted display, etc., or an autonomous apparatus, like a robot, an autonomous driving apparatus, or a smart home apparatus, etc. Such apparatus can implement applications in the field of augmented/mixed reality, and autonomous robot/driving.

Even if not described, such device or apparatus can also comprise at least one camera, at least one display, or other classical devices.

## Claims

1. A method for joint segmentation and 3D reconstruction of a scene, from a set of at least one image of the scene, comprising:
- obtaining (11) an initial 3D reconstruction of the scene;
- obtaining (12) initial 3D features associated with the initial 3D reconstruction;
- obtaining (13) an initial segmentation of the initial 3D reconstruction;
- determining (14) enhanced 3D features, from the initial 3D features and from initial 2D features determined in at least one image of the set, as corresponding to the initial 3D features associated with said initial 3D reconstruction of the scene; and
- determining (15) an enhanced segmentation and a refined 3D reconstruction, from the initial segmentation and the enhanced 3D features.

2. The method according to claim 1, wherein said 3D features are 3D feature lines and said 2D features are 2D feature lines.

3. The method according to claim 1 or 2, wherein obtaining (11) the initial 3D reconstruction of the scene comprises constructing the initial 3D reconstruction from depth data.

4. The method according to any of claims 1 to 3, wherein obtaining (12) the initial 3D features comprises identifying 3D features in the initial 3D reconstruction of the scene using geometry characteristics and/or local feature descriptors.

5. The method according to any of claims 1 to 4, wherein it comprises determining the initial 2D features from:
- selecting images of the set comprising the initial 3D features, known as visible images, and
- identifying the initial 2D features, in the visible images, matching the initial 3D features,
and wherein determining the enhanced 3D features comprises:
- generating geometric cues by matching the initial 2D features across at least two visible images, and
- enhancing the initial 3D features with the geometric cues to determine the enhanced 3D features.

6. The method according to any of claims 1 to 5, comprising at least one iteration of:
- determining further enhanced 3D features, from the enhanced 3D features and from enhanced 2D features determined in said at least one image of the set, as corresponding to the enhanced 3D features associated with said refined 3D reconstruction of the scene; and
- determining a further enhanced segmentation and a further refined 3D reconstruction from the enhanced segmentation and the further enhanced 3D features.

7. The method according to claim 6, wherein the iterations are stopped when a predetermined precision threshold on at least a matching between said further enhanced 3D features and said enhanced 2D features is reached.

8. The method according to claim 7, wherein said predetermined precision threshold is jointly applied to at least one of a segmentation level, a consistency of labels between neighboring similar 3D elements measured on said further refined 3D reconstruction, and an alignment between said at least one image of the set and said further refined 3D reconstruction.

9. The method according to any of claims 6 to 8, wherein the iterations are stopped when a predetermined number of iterations is reached.

10. The method according to any of claims 1 to 9, wherein determining the enhanced segmentation relies on segmentation constraints.

11. The method according to claim 10, wherein the segmentation constraints are related to at least one segment shape.

12. The method according to any of claims 1 to 11, comprising receiving said initial 3D reconstruction and said set of at least one image as at least one input, determining the enhanced 3D features, enhanced segmentation and refined 3D reconstruction with at least one processor and outputting said enhanced segmentation and said refined 3D reconstruction from at least one output for displaying said refined 3D reconstruction to a user and for processing said refined 3D reconstruction by means of said enhanced segmentation.

13. A computer program product downloadable from a communication network and/or recorded on a medium readable by computer and/or executable by a processor comprising software code adapted to perform a method according to anyone of claims 1 to 12 when it is executed by a processor.

14. A device for joint segmentation and 3D reconstruction of a scene, from a set of at least one image of the scene, comprising at least one processor adapted and configured to:
- obtain an initial 3D reconstruction of the scene;
- obtain initial 3D features associated with the initial 3D reconstruction;
- obtain an initial segmentation of the initial 3D reconstruction;
- determine enhanced 3D features, from the initial 3D features and from initial 2D features determined in at least one image of the set, as corresponding to the initial 3D features associated with said initial 3D reconstruction of the scene; and
- determine an enhanced segmentation and a refined 3D reconstruction, from the initial segmentation and the enhanced 3D features.

15. An apparatus **characterized in that** it comprises a device according to claim 14, said apparatus being a mobile apparatus preferably chosen among a mobile phone, a tablet, or a head-mounted display, or an autonomous apparatus, preferably chosen a robot, an autonomous driving apparatus, or a smart home apparatus.
